# EUROPEAN PATENT APPLICATION

(11) **EP 4 768 671 A1**
(43) Date of publication of application: **01.07.2026**
(21) Application number: 25193948.4
(22) Date of filing: 05.08.2025
(51) Int. Cl.: E02F 9/22, F16H 61/456

(54) **HYDRAULIC WALKING SYSTEM, CONTROL METHOD FOR HYDRAULIC WALKING SYSTEM, AND STATIC HYDRAULIC LOADER**

(30) Priority: 25.12.2024 CN 202411923896
(71) Applicant: Shandong Lingong Construction Machinery Co., Ltd., Linyi, Shandong 276023 (CN)
(72) Inventor: CHI, Feng, Linyi, Shandong 276023 (CN); DONG, Lidui, Linyi, Shandong 276023 (CN); LUO, Ming, Linyi, Shandong 276023 (CN); WANG, Yong, Linyi, Shandong 276023 (CN)
(74) Representative: Keller Schneider Patent- und Markenanwälte AG

(57) **Abstract**

The present application relates to the technical field of construction machinery and discloses a hydraulic walking system, a control method for the hydraulic walking system, and a static hydraulic loader. The system includes a piston pump, a front axle motor, a rear axle motor, and a flow dividing and converging valve. The piston pump is configured to drive forward or reverse movement based on hydraulic oil. The flow dividing and converging valve is connected to the piston pump, and is configured to adjust the flow direction of the hydraulic oil, enabling the hydraulic oil to flow into the front axle motor and the rear axle motor in a parallel-connection or series-connection form. The front axle motor and the rear axle motor are connected to the flow dividing and converging valve, and are configured to convert hydraulic energy of the hydraulic oil into mechanical energy. The present application enables the forward and reverse movement of the hydraulic walking system, and the series and parallel connection of the motors, wherein the flow direction of the hydraulic oil can be flexibly adjusted, thereby providing different walking speeds and traction forces, and ensuring the normal operation of a small-type static hydraulic loader under various working conditions.

## Description

### CROSS REFERENCE TO RELATED APPLICATION

The present application claims the priority of the Chinese patent application filed to China National Intellectual Property Administration, filed on December 25th, 2024, with the application number of 202411923896.0 and the invention name of "HYDRAULIC WALKING SYSTEM, CONTROL METHOD FOR HYDRAULIC WALKING SYSTEM, AND STATIC HYDRAULIC LOADER", the entire contents of which are incorporated herein by reference.

### TECHNICAL FIELD

The present application relates to the technical field of construction machinery, in particular relates to a hydraulic walking system, a control method for a hydraulic walking system, and a static hydraulic loader.

### BACKGROUND

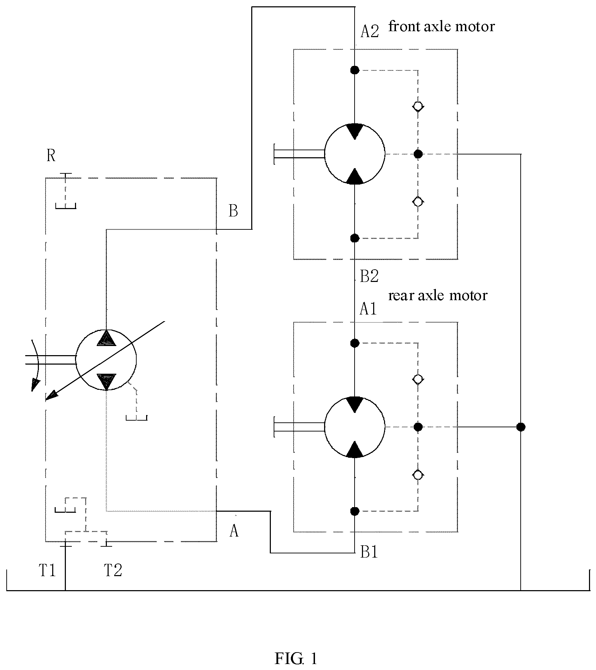

The walking speed and the traction force are the core performance indicators of a small-type static hydraulic loader, directly influencing the overall working efficiency and the ability to recover from being stuck. Currently, small-type static hydraulic loaders are typically equipped with a hydraulic walking system comprising a single fixed-displacement piston pump and a double-cycloid motor system, which includes a piston pump, a front axle motor, and a rear axle motor, as shown in Figure 1, hydraulic oil is discharged from port A of the piston pump, flows through port B1 to port A1 of the rear axle motor, then enters port B2 to port A2 of the front axle motor, and finally returns to port B of the piston pump from port A2 to complete the circulation. The hydraulic oil passes through the front and rear axle motors sequentially, connecting the two motors in series. As a result, the loader can only operate at a single walking speed with a fixed output torque. Therefore, to ensure normal operation, the loader can only connect the front and rear axle motors in series, maintaining a high driving speed. Under this condition, the use of the motors is restricted, and the output torque is small, which leads to a small traction force. Consequently, when the loader is stuck, it has difficulty to recover due to the lack of adequate traction force.

### SUMMARY OF THE INVENTION

In view of this, the present application provides a hydraulic walking system, a control method for a hydraulic walking system and a static hydrostatic loader to solve the problem that the hydraulic walking system is restricted in the use of motors.

In a first aspect, the present application provides a hydraulic walking system, including: a piston pump, a front axle motor, a rear axle motor and a flow dividing and converging valve; the piston pump is configured to drive forward or reverse movement based on hydraulic oil; the flow dividing and converging valve is connected to the piston pump, and is configured to adjust the flow direction of the hydraulic oil, such that the hydraulic oil flows into the front axle motor and the rear axle motor in a parallel-connection or series-connection form; the front axle motor and the rear axle motor are connected to the flow dividing and converging valve, and are configured to convert hydraulic energy of the hydraulic oil into mechanical energy.

The hydraulic walking system provided in the present application incorporates a flow dividing and converging valve between the piston pump and the front/rear axle motors. This flow dividing and converging valve adjusts the flow direction of hydraulic oil discharged from the piston pump during forward or reverse movement, enabling the oil to enter the front axle motor and the rear axle motor in either a parallel-connection form or a series-connection form. This enables the forward and reverse movement of the hydraulic walking system, and the series and parallel connection of the motors, wherein the flow direction of the hydraulic oil can be flexibly adjusted, thereby providing different walking speeds and traction forces, and ensuring the normal operation of a small-type static hydraulic loader under various working conditions.

In an optional embodiment, the flow dividing and converging valve includes: a shuttle valve, a balancing valve, a two-position three-way solenoid valve and a direction control valve; the shuttle valve has two ends thereof respectively connected to two ends of the piston pump, and is configured to control the hydraulic oil to flow in a forward movement direction or a reverse movement direction; the balancing valve has a first port thereof connected to a first port of the piston pump, and has a second port thereof and a third port thereof respectively connected to a first port and a second port of the direction control valve, and is configured to equally divide the hydraulic oil input from the first port of the balancing valve into a first oil path and a second oil path, or combine the first oil path input from the second port of the balancing valve and the second oil path input from the third port into a single oil path; the two-position three-way solenoid valve has a first port thereof connected to a third port of the shuttle valve and a second port thereof connected to a valve control port of the direction control valve, and is configured to adjust a conduction direction of the direction control valve; the direction control valve, has a first port thereof and a second port thereof respectively connected to two ends of the front axle motor or two ends of the rear axle motor, and is configured to control flow directions of the first oil path and the second oil path based on the conduction direction, such that the first oil path and the second oil path flow into the front axle motor and the rear axle motor in the parallel-connection or series-connection form.

The present application achieves the control of the flow direction of hydraulic oil by deploying the shuttle valve, the balancing valve, the two-position three-way solenoid valve and the direction control valve in a specific connection manner, It evenly divides the hydraulic oil into two paths, and enables the parallel and series connection of the front and rear axle motors, thereby achieving the high and low speed control and the forward/reverse movement direction control of the front and rear axle motors.

In an optional embodiment, the direction control valve comprises: a first reversing valve, a second reversing valve, a third reversing valve and a fourth reversing valve, wherein: a first port of the first reversing valve is connected to the second port of the balancing valve and a first port of the front axle motor, and a second port of the first reversing valve is connected to the third port of the balancing valve and a first port of the second reversing valve; a second port of the second reversing valve is connected to a second port of the rear axle motor and a first port of the third reversing valve; a second port of the third reversing valve is connected to a second port of the front axle motor and a first port of the fourth reversing valve; a second port of the fourth reversing valve is connected to a second port of the piston pump and a first port of the rear axle motor; valve control ports of the first reversing valve, the second reversing valve, the third reversing valve, and the fourth reversing valve are all connected to the second port of the two-position three-way solenoid valve.

The present application, by deploying multiple reversing valves, enables the two hydraulic oil paths to be input into the front and rear axle motors in series-connection or parallel-connection form. This provides different walking speeds and traction forces for the small-type static hydraulic loader, ensuring that it operates normally under various working conditions.

In an optional embodiment, the direction control valve is any one of an on-off solenoid direction control valve, a proportional solenoid direction control valve, a hydraulic direction control valve or a manual direction control valve.

The present application, by deploying a directional control valve, can control the valve members within the directional control valve to connect or disconnect the hydraulic oil paths, thereby providing different flow directions and enabling the hydraulic oil to flow into the front and rear axle motors in parallel-connection or series-connection form.

In a second aspect, the present application provides a control method for a hydraulic walking system, the hydraulic walking system includes a piston pump, a flow dividing and converging valve, a front axle motor and a rear axle motor, wherein the piston pump is connected to the front axle motor and the rear axle motor through the flow dividing and converging valve, the control method includes:
controlling the piston pump to pump hydraulic oil into the flow dividing and converging valve in a way of forward movement or reverse movement based on a working state;
controlling a valve direction of the flow dividing and converging valve to cause the hydraulic oil to flow into the front axle motor and the rear axle motor in a parallel-connection or series-connection form;
drawing the hydraulic oil flowing out of the front axle motor and the rear axle motor into the piston pump in a way of forward movement or reverse movement.

The control method of the hydraulic walking system provided in the present application, by controlling the forward or reverse movement of the piston pump according to different working conditions, adjusts the flow direction of the hydraulic oil by using the flow dividing and converging valve, wherein the hydraulic oil is allowed to flow into the front axle motor and the rear axle motor in parallel or in series, and then the hydraulic oil is drawn into the piston pump after flowing out. This enables the forward and reverse movement of the hydraulic walking system, and the series and parallel connection of the motors, wherein the flow direction of the hydraulic oil can be flexibly adjusted, thereby providing different walking speeds and traction forces, and ensuring the normal operation of the small-type static hydraulic loader under various working conditions.

In an optional embodiment, the flow dividing and converging valve includes: a shuttle valve, a balancing valve, a two-position three-way solenoid valve and a direction control valve, the direction control valve comprises: a first reversing valve, a second reversing valve, a third reversing valve and a fourth reversing valve, wherein: two ends of the shuttle valve are respectively connected to two ends of the piston pump; a first port of the balancing valve is connected to a first port of the piston pump, and a second port and a third port of the balancing valve are respectively connected to a first port and a second port of the first reversing valve; a first end of the two-position three-way solenoid valve is connected to a third port of the shuttle valve, and a second port of the two-position three-way solenoid valve is connected to valve control ports of the direction control valve; a first port of the first reversing valve is connected to a first port of the front axle motor, and a second port of the first reversing valve is connected to a first port of the second reversing valve; a second port of the second reversing valve is connected to a second port of the rear axle motor and a first port of the third reversing valve; a second port of the third reversing valve is connected to a second port of the front axle motor and a first port of the fourth reversing valve; a second port of the fourth reversing valve is connected to a second port of the piston pump and a first port of the rear axle motor; the step of controlling the valve direction of the flow dividing and converging valve to cause the hydraulic oil to flow into the front axle motor and the rear axle motor in the parallel-connection form includes: if the piston pump works in a way of forward movement, controlling a first port of the shuttle valve in the flow dividing and converging valve to be connected in flow, and controlling a first port of the two-position three-way solenoid valve in the flow dividing and converging valve to be in a spring position, controlling two ends of the first reversing valve to be disconnected from each other, controlling two ends of the second reversing valve to be connected with each other, controlling two ends of the third reversing valve to be disconnected from each other and controlling two ends of the fourth reversing valve to be connected with each other in the flow dividing and converging valve, such that the hydraulic oil passes through a first port of the balancing valve in the flow dividing and converging valve and is divided into a first oil path and a second oil path through a second port and a third port of the balancing valve; the first oil path flows into the first port of the front axle motor, flows out from the second port of the front axle motor to the first port of the fourth reversing valve, and flows out from the second port of the fourth reversing valve; the second oil path flows into the first port of the second reversing valve, flows out from the second port of the second reversing valve to the second port of the rear axle motor, and flows out from the first port of the rear axle motor.

The present application, by controlling the hydraulic oil to flow out in a forward movement direction and simultaneously enter the front and rear axle motors in a parallel-connection form, enables the motors to rotate or operate at a low speed. Under this condition, the motors output high torque, allowing the entire machine to move forward with high traction force.

In an optional embodiment, the step of controlling the valve direction of the flow dividing and converging valve to cause the hydraulic oil to flow into the front axle motor and the rear axle motor in the parallel-connection form includes: if the piston pump works in a way of reverse movement, controlling a second port of the shuttle valve in the flow dividing and converging valve to be connected in flow, and controlling the first port of the two-position three-way solenoid valve in the flow dividing and converging valve to be in the spring position, controlling two ends of the first reversing valve to be disconnected from each other, controlling two ends of the second reversing valve to be connected with each other, controlling two ends of the third reversing valve to be disconnected from each other and controlling two ends of the fourth reversing valve to be connected with each other in the flow dividing and converging valve, such that the hydraulic oil is divided into the first oil path and the second oil path, the first oil path flows into the second port of the fourth reversing valve, flows out from the first port of the fourth reversing valve to the second port of the front axle motor, and flows out from the first port of the front axle motor; the second oil path flows into the first port of the rear axle motor, flows out from the second port of the rear axle motor to the second port of the second reversing valve, and flows out from the first port of the second reversing valve; the second oil path flowing out from the first port of the second reversing valve flows into the third port of the balancing valve, the first oil path flowing out from the first port of the front axle motor flows into the second port of the balancing valve, and both the first and second oil paths flow out through the first port of the balancing valve to converge into a single oil path of the hydraulic oil.

The present application, by controlling the hydraulic oil to flow out in a reverse movement direction and simultaneously enter the front and rear axle motors in a parallel-connection form, enables the motors to rotate or operate in a reverse direction at a low speed. Under this condition, the motors output high torque, allowing the entire machine to move backward with high traction force.

In an optional embodiment, the step of controlling the valve direction of the flow dividing and converging valve to cause the hydraulic oil to flow into the front axle motor and the rear axle motor in the series-connection form includes: if the piston pump works in a way of forward movement, controlling the first port of the shuttle valve in the flow dividing and converging valve to be connected in flow, and controlling the first port of the two-position three-way solenoid valve in the flow dividing and converging valve to be in a solenoid-valve position, controlling two ends of the first reversing valve to be connected with each other, controlling two ends of the second reversing valve to be disconnected from each other, controlling two ends of the third reversing valve to be connected with each other and controlling two ends of the fourth reversing valve to be disconnected from each other in the flow dividing and converging valve, such that the hydraulic oil passes through the first port of the balancing valve in the flow dividing and converging valve and is divided into a first oil path and a second oil path through the second port and the third port of the balancing valve; the second oil path flows into the second port of the first reversing valve, and flows out from the first port of the first reversing valve to converge with the first oil path, and the converged first and second oil paths flow into the first port of the front axle motor, and flow out from the second port of the front axle motor to the second port of the third reversing valve, flow out from the first port of the third reversing valve to the second port of the rear axle motor, and flow out from the first port of the rear axle motor.

The control method of the present application, by controlling the hydraulic oil to flow out in a forward movement direction and sequentially enter the front and rear axle motors in a series-connection form, enables the motors to rotate or operate at a high speed, allowing the entire machine to move forward at a high speed.

In an optional embodiment, the step of controlling the valve direction of the flow dividing and converging valve to cause the hydraulic oil to flow into the front axle motor and the rear axle motor in the series-connection form includes: if the piston pump works in a way of reverse movement, controlling a second port of the shuttle valve in the flow dividing and converging valve to be connected in flow, and controlling the first port of the two-position three-way solenoid valve in the flow dividing and converging valve to be in a solenoid-valve position, controlling two ends of the first reversing valve to be connected with each other, controlling two ends of the second reversing valve to be disconnected from each other, controlling two ends of the third reversing valve to be connected with each other and controlling two ends of the fourth reversing valve to be disconnected from each other in the flow dividing and converging valve, such that the hydraulic oil flows into the first port of the rear axle motor, flows out from the second port of the rear axle motor to the first port of the third reversing valve, and flows out from the second port of the third reversing valve to the second port of the front axle motor, and flows out from the first port of the front axle motor, and then, flows into the second port of the balancing valve in one path, or flows into the third port of the balancing valve after passing through the first reversing valve in another path, and both paths of the hydraulic oil converge to flow out from the first port of the balancing valve.

The control method of the present application, by controlling the hydraulic oil to flow out in a reverse movement direction and then sequentially enter the front and rear axle motors in a series-connection form, enables the motors to rotate or operate in a reverse direction at a high speed, thereby allowing the entire machine to move backward at a high speed.

In a third aspect, the present application provides a static hydraulic loader, which includes the hydraulic walking system according to the first aspect described above or any of its corresponding embodiments.

### BRIEF DESCRIPTION OF THE DRAWINGS

In order to explain the technical solutions in the specific embodiments of the present application or in the prior art more clearly, the drawings needed in the description of the specific embodiments or the prior art will be briefly introduced below. Apparently, the drawings described below only represent some embodiments of the present application. For a person with ordinary skill in the art, other drawings can be obtained according to these drawings without creative work.
Fig. 1 is a structural block diagram of a hydraulic walking system comprising a single fixed-displacement piston pump and a double-cycloid motor system according to an embodiment of the present application;
Fig. 2 is a structural block diagram of the hydraulic walking system according to an embodiment of the present application;
Fig. 3 is a schematic flowchart of the control method for the hydraulic walking system according to an embodiment of the present application;
Fig. 4 is a schematic diagram of a parallel-connection form of the control method for the hydraulic walking system according to an embodiment of the present application;
Fig. 5 is a schematic flowchart of another control method for the hydraulic walking system according to an embodiment of the present application;
Fig. 6 is a schematic diagram of a series-connection form of another control method for the hydraulic walking system according to an embodiment of the present application.

### Reference Numerals:

100 - piston pump; 200 - flow dividing and converging valve; 201 - shuttle valve; 202 - balancing valve; 203 - two-position three-way solenoid valve; 204 - first reversing valve; 205 - second reversing valve; 206 - third reversing valve; 207 - fourth reversing valve; 301 - front axle motor; 302 - rear axle motor.

### DETAILED DESCRIPTION OF SPECIFIC EMBODIMENTS

In order to make the purpose, technical scheme and advantages of the embodiments of the present application more clearly understood, the technical scheme of the present application will be described clearly and completely with reference to the drawings. Apparently, the described embodiments only represent part of the embodiments of the present application, not all of them. Based on the embodiments described in the present application, all other embodiments obtainable by a person with ordinary skill in the art without creative work belong to the protection scope of the present application.

The embodiments of the present application are applicable to scenarios wherein the hydraulic walking system of a small-type static hydraulic loader is controlled according to working conditions. As shown in Figure 1, in the existing hydraulic walking system comprising a single fixed-displacement piston pump and a double-cycloid motor system configured for small-type static hydraulic loaders, hydraulic oil is discharged from port A of the pump, passes through port B1 to port A1 of the rear axle motor, then enters port B2 to port A2 of the front axle motor, and returns to port B of the pump from port A2 to complete the circulation. The hydraulic oil sequentially passes through the front and rear axle motors, which are connected in series. In this configuration, the entire machine has only one walking speed and only one traction force, so its applicability is limited. In consideration of this, the embodiments of the present application provide a hydraulic walking system that deploys a flow dividing and converging valve to enable the flow direction of hydraulic oil within the system to be flexibly adjusted.

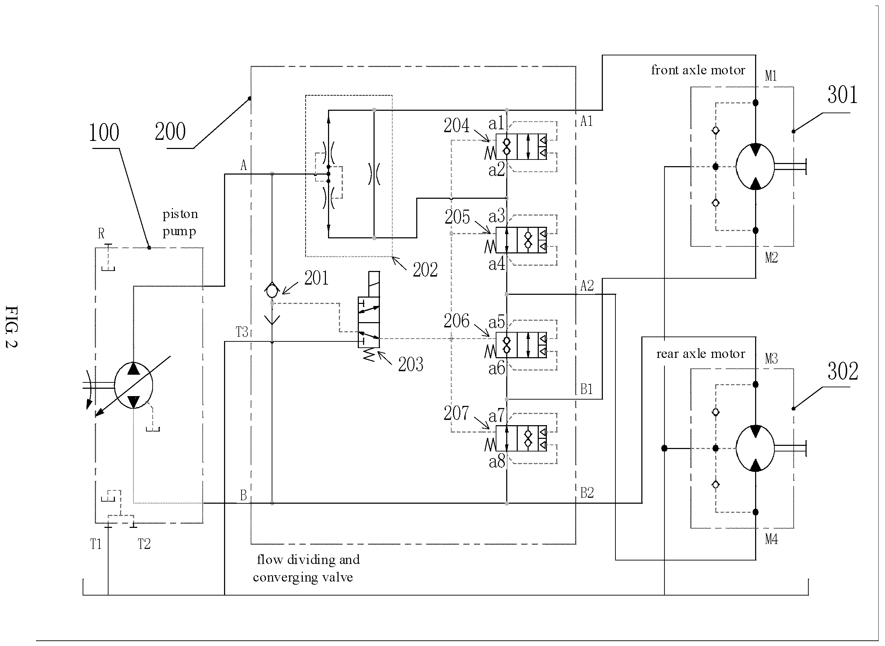

According to an embodiment of the present application, an embodiment of a hydraulic walking system is provided. Figure 2 is a structural block diagram of the hydraulic walking system according to an embodiment of the present application. As shown in Figure 2, the system includes: a piston pump 100, a flow dividing and converging valve 200, a front axle motor 301 and a rear axle motor 302; the piston pump 100 is configured to drive forward or reverse movement based on hydraulic oil; the flow dividing and converging valve 200 is connected to the piston pump 100, and is configured to adjust the flow direction of the hydraulic oil, such that the hydraulic oil flows into the front axle motor 301 and the rear axle motor 302 in a parallel-connection or series-connection form; the front axle motor 301 and the rear axle motor 302 are connected to the flow dividing and converging valve 200, and are configured to convert hydraulic energy of the hydraulic oil into mechanical energy.

Specifically, in the embodiment of the present application, as shown in Figure 2, the flow dividing and converging valve 200 includes: a shuttle valve 201, a balancing valve 202, a two-position three-way solenoid valve 203 and a direction control valve; the direction control valve includes: a first reversing valve 204, a second reversing valve 205, a third reversing valve 206 and a fourth reversing valve 207 connected in sequence. After the directional control valves are interconnected, four ports are formed: A1, A2, B1, and B2. M1 and M2 are ports of the front axle motor 301, serving as inlet and outlet ports relative to each other; M3 and M4 are ports of the rear axle motor 302, serving as inlet and outlet ports relative to each other. Ports A and B are ports of the piston pump, serving as inlet and outlet ports relative to each other. If oil enters from port A and returns to port B, it represents forward movement; if oil enters from port B and returns to port A, it represents reverse movement. During forward movement, the motors rotate in the forward direction; during reverse movement, the motors rotate in the reverse direction.

In some optional embodiments, as shown in Figure 2, in the flow dividing and converging valve 200 of the embodiment of the present application, both ends of the shuttle valve 201 are respectively connected to the two ends of the piston pump 100: port A and port B, and are used to control the forward or reverse movement direction of the hydraulic oil. The first port of the balancing valve 202 is connected to the first port A of the piston pump 100, and the second and third ports are respectively connected to a first port a1 and a second port a2 of the first reversing valve 204. It is used to evenly divide the hydraulic oil input from the first port into a first oil path and a second oil path, or combine the first oil path and the second oil path input from the second and third ports into a single path. The first end of the two-position three-way solenoid valve 203 is connected to the third port of the shuttle valve 201, and the second port thereof is connected to the valve control ports of the first reversing valve 204, the second reversing valve 205, the third reversing valve 206, and the fourth reversing valve 207, which is used to adjust the connection direction of the first reversing valve 204, the second reversing valve 205, the third reversing valve 206, and the fourth reversing valve 207. The directional control reversing valves are used to control the flow direction of the first oil path and the second oil path based on the connection direction, and enable the first oil path and the second oil path to flow into the front axle motor and the rear axle motor in parallel-connection or series-connection form.

In some optional embodiments, as shown in Figure 2, the first port a1 of the first reversing valve 204 is connected to the first port M1 of the front axle motor 301; the second port a2 of the first reversing valve 204 is connected to a first port a3 of the second reversing valve 205; a second port a4 of the second reversing valve is connected to the second port M4 of the rear axle motor 302 and a first port a5 of the third reversing valve 206; a second port a6 of the third reversing valve 206 is connected to the second port M2 of the front axle motor 301 and a first port a7 of the fourth reversing valve 207; a second port a8 of the fourth reversing valve 207 is connected to the second port B of the piston pump 100 and the first port M3 of the rear axle motor 302. Therefore, the oil ports of the hydraulic walking system that are always in communication include: a1 in communication with A1; a4 and a5 in communication with A2; a6 and a7 in communication with B1; and a8 in communication with B2.

In some optional embodiments, the flow dividing and converging valve 200 switches between different oil paths by means of the action of solenoid valves, enabling the high-pressure hydraulic oil entering from port A or port B to flow out through different outlets as needed, so as to achieve the purpose of controlling the series or parallel connection of the front and rear axle motors and thus realize the switching of torque magnitude. In the parallel-connection form, the front axle motor 301 and rear axle motor 302 form two loads that evenly divide the oil inflow from the ports A1, A2 or from the ports B1, B2, and the hydraulic oil from the ports A1, A2 or from the ports B1, B2 enters the front and rear axle motors simultaneously with no sequence distinction. In the series-connection form, the hydraulic oil entering a component through the port A1 or the port B2 passes through the front axle motor 301 and the rear axle motor 302 sequentially, and the sequence thereof is determined based on the specific oil inlet port that is used.

In some optional embodiments, the working principle of the shuttle valve 201 relies primarily on the vertical movement of the valve core on the valve seat to control the flow of the hydraulic medium, thereby achieving regulation and control of the hydraulic fluid. Specifically, when the actuator applies force to move the valve core up and down, the clearance between the valve core and the valve seat changes, affecting the flow rate of the hydraulic medium. When the valve core rises, the clearance increases, allowing the hydraulic medium to flow smoothly; when the valve core descends, the clearance decreases, restricting the medium flow. In the embodiment of the present application, the shuttle valve 201 comes into connection with port A or port B by the vertical movement of the valve core, thereby achieving forward and reverse rotation of the hydraulic walking system.

In some optional embodiments, the working principle of the balancing valve 202 is to change the flow resistance through the valve by changing the clearance (opening-degree) between the valve core and the valve seat, thereby achieving the purpose of regulating the flow rate. This regulation targets the system resistance, enabling the hydraulic oil to be divided in a balanced manner according to the designed calculation ratio, ensuring that each branch path can still meet the flow-rate demand under a partial load condition and playing a balancing role. In the embodiment of the present application, the balancing valve 202 divides the hydraulic oil equally into two paths.

In some optional embodiments, the working principle of the two-position three-way solenoid valve 203 primarily comprises two aspects: electromagnetic principle and mechanical principle. The electromagnetic principle involves controlling the opening and closing of the valve by mean of the attraction and release of an electromagnet. When energized, the electromagnet generates a magnetic field that attracts the iron core, thereby opening the valve; when de-energized, the iron core loses magnetism, causing the valve to close. The mechanical principle involves controlling the flow direction of the hydraulic medium by mean of the movement of the valve core. When the electromagnet is energized, the valve core is attracted, altering the hydraulic medium's flow direction; when de-energized, the valve core returns to its original position under the action of a spring, restoring the hydraulic medium's flow direction. This is provided only as an example and is not intended to be limiting. As shown in Figure 2, in the embodiment of the present application, the spring of the two-position three-way solenoid valve 203 is located on the lower side, and the solenoid valve position is on the upper side, thereby enabling connection between the shuttle valve 201 and each reversing valve. This allows the control oil flowing from the shuttle valve 201 through the two-position three-way solenoid valve 203 to each of the reversing valves to adjust the connection state of the reversing valves, with the flow direction of the control oil indicated by the dashed lines in Figure 2.

In some optional embodiments, the working principle of the directional control valve is to change the flow direction of hydraulic oil through the relative movement of the valve core within the valve body, thereby altering the movement direction of the actuator. The directional control valve has two or more flow patterns and two or more ports, primarily achieving communication, cutoff, and reversal of the hydraulic oil flow, as well as pressure unloading and sequential action control, by mean of the relative movement of the valve core and valve body. The directional control valve can be configured as various types of directional control valves with different control modes, such as on-off solenoid directional control valves, proportional solenoid directional control valves, hydraulic directional control valves, and manual directional control valves. These are provided as an example and are not intended to be limiting. As shown in Figure 2, the directional control valves in the embodiment of the present application include check valves and reversing valves, with connection of the check valves or reversing valves achieved by using control oil. The specific connection scenario is determined based on the operating state of the hydraulic walking system.

The hydraulic walking system provided in the present application incorporates a flow dividing and converging valve between the piston pump and the front/rear axle motors. This flow dividing and converging valve adjusts the flow direction of hydraulic oil discharged from the piston pump during forward or reverse movement, enabling the oil to enter the front axle motor and the rear axle motor in either a parallel-connection form or a series-connection form. This enables the forward and reverse movement of the hydraulic walking system, and the series and parallel connection of the motors, wherein the flow direction of the hydraulic oil can be flexibly adjusted, thereby providing different walking speeds and traction forces, and ensuring the normal operation of the small-type static hydraulic loader under various working conditions. Furthermore, various solenoid valves are integrally designed into a flow dividing and converging valve, resulting in a system with small volume, high integration level, and easy operability. The control modes thereof include electronic control, hydraulic control, manual control, and the like.

According to an embodiment of the present application, an embodiment of a control method for a hydraulic walking system is provided. It should be noted that the steps shown in the flowcharts of the accompanying drawings may be executed in a computer system such as comprising a set of computer-executable instructions. Although a logical sequence is shown in the flowchart, in some cases, the steps shown or described may be performed in a sequence different from that presented here.

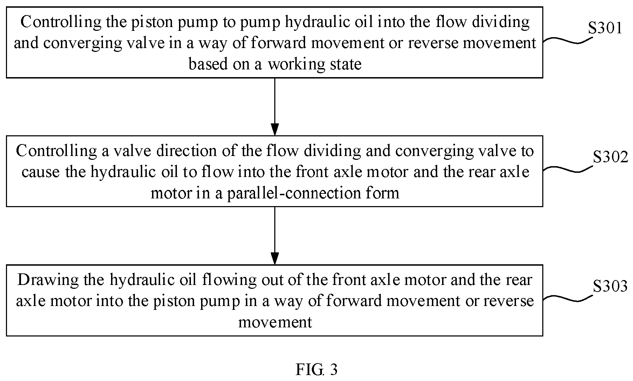

In this embodiment, a control method for a hydraulic walking system is provided, which can be applied to the hydraulic walking system shown in Figure 2 above. Figure 3 is a flowchart of the control method for the hydraulic walking system according to an embodiment of the present application. As shown in Figure 3, the process of the method includes the following steps:
Step 301, Controlling the piston pump to pump hydraulic oil into the flow dividing and converging valve in a way of forward movement or reverse movement based on a working state.
Step 302, Controlling a valve direction of the flow dividing and converging valve to cause the hydraulic oil to flow into the front axle motor and the rear axle motor in a parallel-connection form.
Step 303, Drawing the hydraulic oil flowing out of the front axle motor and the rear axle motor into the piston pump in a way of forward movement or reverse movement.

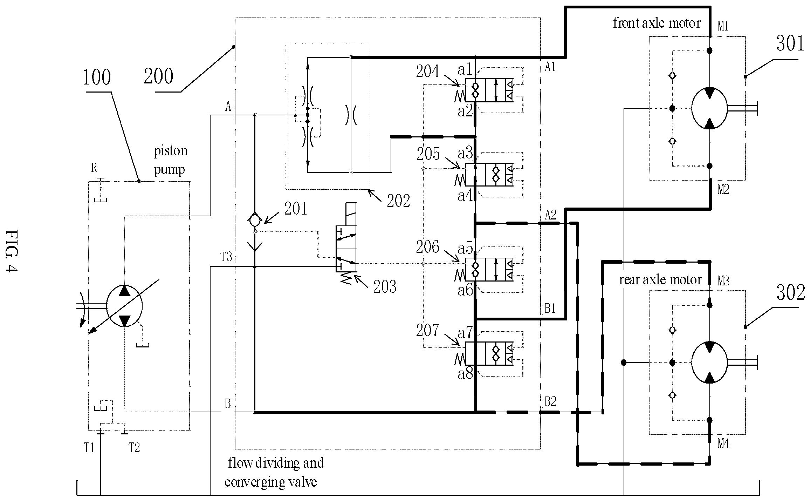

Specifically, in the embodiment of the present application, when the hydrostatic loader is in operation or in a condition of restoring from being stuck, if port A is in an active state, the piston pump operates in the forward direction. That is, hydraulic oil flows out from port A. After the hydraulic oil flows into the shuttle valve, it moves the valve core of the shuttle valve downward, thereby interconnecting the first port and the third port of the shuttle valve. The control oil flowing through the shuttle valve then reaches the first port of the two-position three-way solenoid valve. At this time, by de-energizing the solenoid valve thereof by switch control, the first port of the two-position three-way solenoid valve is set to the spring position, thereby controlling two ends of the first reversing valve to be disconnected from each other, controlling two ends of the second reversing valve to be connected with each other, controlling two ends of the third reversing valve to be disconnected from each other and controlling two ends of the fourth reversing valve to be connected with each other. At this point, port a1 of the first reversing valve is connected to port A1, port a1 is disconnected from port a2 of the first reversing valve, port a3 of the second reversing valve is connected to port a4, ports a4 of the second reversing valve and port a5 of the third reversing valve are both connected to port A2, port a5 of the third reversing valve is disconnected from port a6, port B1 is connected to port a7 of the fourth reversing valve and thus is in communication with port a8 thereof, and port B2 is connected to port a8. The connection state of the hydraulic walking system is shown in Figure 4. The hydraulic oil flowing out from port A passes through a first port of the balancing valve in the flow dividing and converging valve and is divided into a first oil path and a second oil path through a second port and a third port of the balancing valve. The first oil path flows into port M1 of the front axle motor, exits from port M2 of the front axle motor to port a7 of the fourth reversing valve, and then exits from port a8 of the fourth reversing valve. The second oil path flows into port a3 of the second reversing valve, exits from port a4 of the second reversing valve to port M4 of the rear axle motor, and then exits from port M3 of the rear axle motor. The hydraulic oil exiting from port a8 and the hydraulic oil exiting from port M3 simultaneously flow into port B of the piston pump. At this time, the front and rear axle motors are in parallel-connection form, with the motors rotating or operating at a low speed. The motors output high torque, enabling the entire machine to move forward with high traction force.

In some optional embodiments, when the hydrostatic loader is in operation or in a condition of restoring from being stuck, if port B is in an active state, the piston pump operates in the reverse direction. That is, hydraulic oil flows out from port B. After the hydraulic oil flows into the shuttle valve, it moves the valve core of the shuttle valve upward, thereby interconnecting the second port and the third port of the shuttle valve. The control oil flowing through the shuttle valve then reaches the first port of the two-position three-way solenoid valve. At this time, by de-energizing the solenoid valve thereof by switch control, the first port of the two-position three-way solenoid valve is set to the spring position, thereby controlling two ends of the first reversing valve to be disconnected from each other, controlling two ends of the second reversing valve to be connected with each other, controlling two ends of the third reversing valve to be disconnected from each other and controlling two ends of the fourth reversing valve to be connected with each other. At this point, port a1 of the first reversing valve is connected to port A1, port a1 of the first reversing valve is disconnected from port a2 of the first reversing valve, port a3 of the second reversing valve is connected to port a4 of the second reversing valve, port a4 of the second reversing valve and port a5 of the third reversing valve are both connected to port A2, port a5 of the third reversing valve is disconnected from port a6 of the third reversing valve, port B1 is connected to port a7 of the fourth reversing valve and thus is in communication with port a8 thereof, and port B2 is connected to port a8 of the fourth reversing valve. The connection state of the hydraulic walking system is as shown in Figure 4. The hydraulic oil flowing out from port B is divided into a first oil path and a second oil path. The first oil path flows into port a8 of the fourth reversing valve, exits from port a7 of the fourth reversing valve to port M2 of the front axle motor, and then exits from port M1 of the front axle motor. The second oil path flows into port M3 of the rear axle motor, exits from port M4 of the rear axle motor to port a4 of the second reversing valve, and then exits from port a3 of the second reversing valve. The second oil path exiting from port a3 of the second reversing valve flows into the third port of the balancing valve, and the first oil path exiting from port M1 of the front axle motor flows into the second port of the balancing valve. Both the first and second oil paths flow out through the first port of the balancing valve to converge into a single oil path of hydraulic oil and flow into port A of the piston pump. At this time, the front and rear axle motors are in parallel-connection form, with the motors rotating or operating in a reverse direction at a low speed. The motors output high torque, enabling the entire machine to move backward with high traction force.

The control method of the hydraulic walking system provided in the present application, by controlling the forward or reverse movement of the piston pump according to different working conditions, adjusts the flow direction of the hydraulic oil by using the flow dividing and converging valve, wherein the hydraulic oil is allowed to flow into the front axle motor and the rear axle motor in parallel or in series, and then the hydraulic oil is drawn into the piston pump after flowing out. This enables the forward and reverse movement of the hydraulic walking system, and the series and parallel connection of the motors, wherein the flow direction of the hydraulic oil can be flexibly adjusted, thereby providing different walking speeds and traction forces, and ensuring the normal operation of the small-type static hydraulic loader under various working conditions.

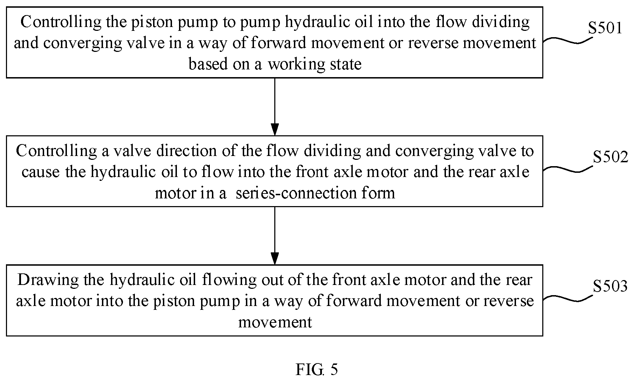

In this embodiment, a control method for a hydraulic walking system is provided, which can be applied to the hydraulic walking system shown in Figure 2 above. Figure 5 is a flowchart of the control method for the hydraulic walking system according to an embodiment of the present application. As shown in Figure 5, the process of the method includes the following steps:
Step 501, Controlling the piston pump to pump hydraulic oil into the flow dividing and converging valve in a way of forward movement or reverse movement based on a working state.
Step 502, Controlling a valve direction of the flow dividing and converging valve to cause the hydraulic oil to flow into the front axle motor and the rear axle motor in a series-connection form.
Step 503, Drawing the hydraulic oil flowing out of the front axle motor and the rear axle motor into the piston pump in a way of forward movement or reverse movement.

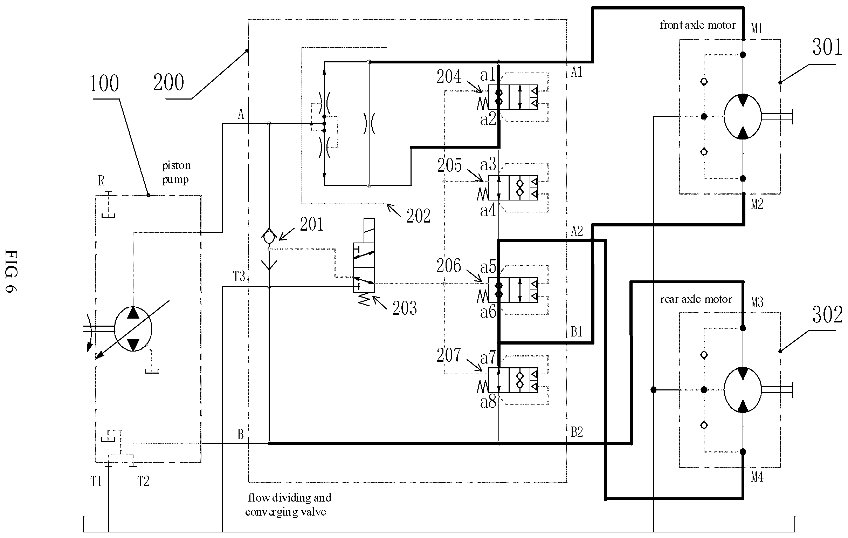

Specifically, in the embodiment of the present application, when the hydrostatic loader is in a working condition of transferring between sites, if port A is in an active state, the piston pump operates in the forward direction. That is, hydraulic oil flows out from port A. After the hydraulic oil flows into the shuttle valve, it moves the valve core of the shuttle valve downward, thereby interconnecting the first port and the third port of the shuttle valve. The control oil flowing through the shuttle valve then reaches the first port of the two-position three-way solenoid valve. At this time, the first port of the two-position three-way solenoid valve is set to the solenoid valve position by switch control, thereby controlling two ends of the first reversing valve to be connected with each other, controlling two ends of the second reversing valve to be disconnected from each other, controlling two ends of the third reversing valve to be connected with each other and controlling two ends of the fourth reversing valve to be disconnected from each other. At this point, port a1 of the first reversing valve is connected to port A1, port a1 of the first reversing valve is connected to port a2 of the first reversing valve, port a3 of the second reversing valve is disconnected from port a4 of the second reversing valve, port A2 is connected to port a5 of the third reversing valve and thus is in communication with port a6 thereof, port B1 is connected to port a6 of the third reversing valve, port a7 of the fourth reversing valve is disconnected from port a8 of the fourth reversing valve, and port B2 is connected to port a8 of the fourth reversing valve. The connection state of the hydraulic walking system is as shown in Figure 6. The hydraulic oil flowing out from port A passes through the first port of the balancing valve in the flow dividing and converging valve and is divided into a first oil path and a second oil path through the second port and the third port of the balancing valve. The second oil path flows into port a2 of the first reversing valve, and flows out from port a1 of the first reversing valve to converge with the first oil path, and then the converged first and second oil paths flow into port M1 of the front axle motor, flow out from port M2 of the front axle motor to port a6 of the third reversing valve, flow out from port a5 of the third reversing valve to port M4 of the rear axle motor, and then flow out from port M3 of the rear axle motor into port B of the piston pump. At this time, the front and rear motors are in series-connection form, with the motors rotating or operating at a high speed, enabling the entire machine to move forward at a high speed.

In some optional implementations, when the hydrostatic loader is in a working condition of transferring between sites, if port B is in an active state, the piston pump operates in the reverse direction. That is, hydraulic oil flows out from port B. After the hydraulic oil flows into the shuttle valve, it moves the valve core of the shuttle valve upward, thereby interconnecting the second port and the third port of the shuttle valve. The control oil flowing through the shuttle valve then reaches the first port of the two-position three-way solenoid valve. At this time, the first port of the two-position three-way solenoid valve is set to the solenoid valve position by switch control, thereby controlling two ends of the first reversing valve to be connected with each other, controlling two ends of the second reversing valve to be disconnected from each other, controlling two ends of the third reversing valve to be connected with each other and controlling two ends of the fourth reversing valve to be disconnected from each other. At this point, port a1 of the first reversing valve is connected to port A1, port a1 of the first reversing valve is connected to port a2 of the first reversing valve, port a3 of the second reversing valve is disconnected from port a4 of the second reversing valve, port A2 is connected to port a5 of the third reversing valve and thus is in communication with port a6 thereof, port B1 is connected to port a6 of the third reversing valve, port a7 of the fourth reversing valve is disconnected from port a8 of the fourth reversing valve, and port B2 is connected to port a8 of the fourth reversing valve. The connection state of the hydraulic walking system is as shown in Figure 6. The hydraulic oil flowing out from port B flows into port M3 of the rear axle motor, exits from port M4 of the rear axle motor to port a5 of the third reversing valve, exits from port a6 of the third reversing valve to port M2 of the front axle motor, and exits from port M1 of the front axle motor, and then, flows to the second port of the balancing valve in one path, or flows into the third port of the balancing valve after passing through the first reversing valve in another path, and both paths of the hydraulic oil converge to flow out from the first port of the balancing valve into port A of the piston pump. At this time, the front and rear motors are in series-connection form, with the motors rotating or operating in a reverse direction at a high speed, enabling the entire machine to move backward at a high speed.

The control method of the hydraulic walking system provided in the present application, by controlling the forward or reverse movement of the piston pump according to different working conditions, adjusts the flow direction of the hydraulic oil by using the flow dividing and converging valve, wherein the hydraulic oil is allowed to flow into the front axle motor and the rear axle motor in parallel or in series, and then the hydraulic oil is drawn into the piston pump after flowing out. This enables the forward and reverse movement of the hydraulic walking system, and the series and parallel connection of the motors, wherein the flow direction of the hydraulic oil can be flexibly adjusted, thereby providing different walking speeds and traction forces, and ensuring the normal operation of the small-type static hydraulic loader under various working conditions.

The present application further provides a static hydraulic loader, which includes the hydraulic walking system as shown in Figure 2.

Although the embodiments of the present application have been described with reference to the accompanying drawings, for those skilled in the art, various modifications and changes may be made to the present application without departing from the principle and scope of the present application, and such modifications and changes should be included within the scope defined the appended claims of the present application.

## Claims

1. A hydraulic walking system, comprising: a piston pump, a front axle motor and a rear axle motor, **characterized in that** the system further comprises: a flow dividing and converging valve;
the piston pump is configured to drive forward or reverse movement based on hydraulic oil;
the flow dividing and converging valve is connected to the piston pump, and is configured to adjust the flow direction of the hydraulic oil, such that the hydraulic oil flows into the front axle motor and the rear axle motor in a parallel-connection or series-connection form;
the front axle motor and the rear axle motor are connected to the flow dividing and converging valve, and are configured to convert hydraulic energy of the hydraulic oil into mechanical energy.

2. The system according to claim 1, **characterized in that** the flow dividing and converging valve comprises: a shuttle valve, a balancing valve, a two-position three-way solenoid valve and a direction control valve;
the shuttle valve, having two ends thereof respectively connected to two ends of the piston pump, is configured to control the hydraulic oil to flow in a forward movement direction or a reverse movement direction;
the balancing valve, having a first port thereof connected to a first port of the piston pump, and having a second port thereof and a third port thereof respectively connected to a first port and a second port of the direction control valve, is configured to equally divide the hydraulic oil input from the first port of the balancing valve into a first oil path and a second oil path, or combine the first oil path input from the second port of the balancing valve and the second oil path input from the third port into a single oil path;
the two-position three-way solenoid valve, having a first port thereof connected to a third port of the shuttle valve and a second port thereof connected to a valve control port of the direction control valve, is configured to adjust a conduction direction of the direction control valve;
the direction control valve, having a first port thereof and a second port thereof respectively connected to two ends of the front axle motor or two ends of the rear axle motor, is configured to control flow directions of the first oil path and the second oil path based on the conduction direction, such that the first oil path and the second oil path flow into the front axle motor and the rear axle motor in the parallel-connection or series-connection form.

3. The system according to claim 2, **characterized in that** the direction control valve comprises: a first reversing valve, a second reversing valve, a third reversing valve and a fourth reversing valve, wherein:
a first port of the first reversing valve is connected to the second port of the balancing valve and a first port of the front axle motor, and a second port of the first reversing valve is connected to the third port of the balancing valve and a first port of the second reversing valve;
a second port of the second reversing valve is connected to a second port of the rear axle motor and a first port of the third reversing valve;
a second port of the third reversing valve is connected to a second port of the front axle motor and a first port of the fourth reversing valve;
a second port of the fourth reversing valve is connected to a second port of the piston pump and a first port of the rear axle motor;
valve control ports of the first reversing valve, the second reversing valve, the third reversing valve, and the fourth reversing valve are all connected to the second port of the two-position three-way solenoid valve.

4. The system according to claim 3, **characterized in that** the direction control valve is any one of an on-off solenoid direction control valve, a proportional solenoid direction control valve, a hydraulic direction control valve or a manual direction control valve.

5. The system according to claim 3, **characterized in that**,
in the parallel-connection form, the front axle motor and the rear axle motor form two loads that evenly divide the oil inflow from two ports, so that the hydraulic oil of the two ports simultaneously enters the front axle motor and the rear axle motor;
in the series-connection form, the hydraulic oil entering a component through one port sequentially passes through the front axle motor and the rear axle motor.

6. A control method for a hydraulic walking system, **characterized in that** the hydraulic walking system comprises a piston pump, a flow dividing and converging valve, a front axle motor and a rear axle motor, wherein the piston pump is connected to the front axle motor and the rear axle motor through the flow dividing and converging valve, the control method comprises:
controlling the piston pump to pump hydraulic oil into the flow dividing and converging valve in a way of forward movement or reverse movement based on a working state;
controlling a valve direction of the flow dividing and converging valve to cause the hydraulic oil to flow into the front axle motor and the rear axle motor in a parallel-connection or series-connection form;
drawing the hydraulic oil flowing out of the front axle motor and the rear axle motor into the piston pump in a way of forward movement or reverse movement.

7. The method according to claim 6, **characterized in that** the flow dividing and converging valve comprises: a shuttle valve, a balancing valve, a two-position three-way solenoid valve and a direction control valve, the direction control valve comprises: a first reversing valve, a second reversing valve, a third reversing valve and a fourth reversing valve, wherein:
two ends of the shuttle valve are respectively connected to two ends of the piston pump; a first port of the balancing valve is connected to a first port of the piston pump, and a second port and a third port of the balancing valve are respectively connected to a first port and a second port of the first reversing valve; a first end of the two-position three-way solenoid valve is connected to a third port of the shuttle valve, and a second port of the two-position three-way solenoid valve is connected to valve control ports of the direction control valve;
a first port of the first reversing valve is connected to a first port of the front axle motor, and a second port of the first reversing valve is connected to a first port of the second reversing valve; a second port of the second reversing valve is connected to a second port of the rear axle motor and a first port of the third reversing valve; a second port of the third reversing valve is connected to a second port of the front axle motor and a first port of the fourth reversing valve; a second port of the fourth reversing valve is connected to a second port of the piston pump and a first port of the rear axle motor;
wherein the hydraulic oil passes through a first port of the balancing valve in the flow dividing and converging valve and is divided into a first oil path and a second oil path through a second port and a third port of the balancing valve.

8. The method according to claim 7, **characterized in that** the step of controlling the valve direction of the flow dividing and converging valve to cause the hydraulic oil to flow into the front axle motor and the rear axle motor in the parallel-connection form comprises:
if the piston pump works in a way of forward movement, controlling a first port of the shuttle valve in the flow dividing and converging valve to be connected in flow, and controlling a first port of the two-position three-way solenoid valve in the flow dividing and converging valve to be in a spring position, controlling two ends of the first reversing valve to be disconnected from each other, controlling two ends of the second reversing valve to be connected with each other, controlling two ends of the third reversing valve to be disconnected from each other and controlling two ends of the fourth reversing valve to be connected with each other in the flow dividing and converging valve, such that
the first oil path flows into the first port of the front axle motor, flows out from the second port of the front axle motor to the first port of the fourth reversing valve, and flows out from the second port of the fourth reversing valve;
the second oil path flows into the first port of the second reversing valve, flows out from the second port of the second reversing valve to the second port of the rear axle motor, and flows out from the first port of the rear axle motor.

9. The method according to claim 7, **characterized in that** the step of controlling the valve direction of the flow dividing and converging valve to cause the hydraulic oil to flow into the front axle motor and the rear axle motor in the parallel-connection form comprises:
if the piston pump works in a way of reverse movement, controlling a second port of the shuttle valve in the flow dividing and converging valve to be connected in flow, and controlling the first port of the two-position three-way solenoid valve in the flow dividing and converging valve to be in the spring position, controlling two ends of the first reversing valve to be disconnected from each other, controlling two ends of the second reversing valve to be connected with each other, controlling two ends of the third reversing valve to be disconnected from each other and controlling two ends of the fourth reversing valve to be connected with each other in the flow dividing and converging valve, such that
the first oil path flows into the second port of the fourth reversing valve, flows out from the first port of the fourth reversing valve to the second port of the front axle motor, and flows out from the first port of the front axle motor;
the second oil path flows into the first port of the rear axle motor, flows out from the second port of the rear axle motor to the second port of the second reversing valve, and flows out from the first port of the second reversing valve;
the second oil path flowing out from the first port of the second reversing valve flows into the third port of the balancing valve, the first oil path flowing out from the first port of the front axle motor flows into the second port of the balancing valve, and both the first and second oil paths flow out through the first port of the balancing valve to converge into a single oil path of the hydraulic oil.

10. The method according to claim 7, **characterized in that** the step of controlling the valve direction of the flow dividing and converging valve to cause the hydraulic oil to flow into the front axle motor and the rear axle motor in the series-connection form comprises:
if the piston pump works in a way of forward movement, controlling the first port of the shuttle valve in the flow dividing and converging valve to be connected in flow, and controlling the first port of the two-position three-way solenoid valve in the flow dividing and converging valve to be in a solenoid-valve position, controlling two ends of the first reversing valve to be connected with each other, controlling two ends of the second reversing valve to be disconnected from each other, controlling two ends of the third reversing valve to be connected with each other and controlling two ends of the fourth reversing valve to be disconnected from each other in the flow dividing and converging valve, such that
the second oil path flows into the second port of the first reversing valve, and flows out from the first port of the first reversing valve to converge with the first oil path, and the converged first and second oil paths flow into the first port of the front axle motor, flow out from the second port of the front axle motor to the second port of the third reversing valve, flow out from the first port of the third reversing valve to the second port of the rear axle motor, and flow out from the first port of the rear axle motor.

11. The method according to claim 7, **characterized in that** the step of controlling the valve direction of the flow dividing and converging valve to cause the hydraulic oil to flow into the front axle motor and the rear axle motor in the series-connection form comprises:
if the piston pump works in a way of reverse movement, controlling a second port of the shuttle valve in the flow dividing and converging valve to be connected in flow, and controlling the first port of the two-position three-way solenoid valve in the flow dividing and converging valve to be in a solenoid-valve position, controlling two ends of the first reversing valve to be connected with each other, controlling two ends of the second reversing valve to be disconnected from each other, controlling two ends of the third reversing valve to be connected with each other and controlling two ends of the fourth reversing valve to be disconnected from each other in the flow dividing and converging valve, such that
the hydraulic oil flows into the first port of the rear axle motor, flows out from the second port of the rear axle motor to the first port of the third reversing valve, and flows out from the second port of the third reversing valve to the second port of the front axle motor, and flows out from the first port of the front axle motor, and then, flows into the second port of the balancing valve in one path, or flows into the third port of the balancing valve after passing through the first reversing valve in another path, and both paths of the hydraulic oil converge to flow out from the first port of the balancing valve.

12. A static hydraulic loader, **characterized in** comprising the hydraulic walking system according to any one of claims 1 to 5.
